Europäisches Patentamt

European Patent Office

Office européen des brevets

(11) Publication number: **0 369 027**
**A1**

## (12) EUROPEAN PATENT APPLICATION
### published in accordance with Art. 158(3) EPC

(21) Application number: 89905174.2

(22) Date of filing: 02.05.89

(86) International application number:
**PCT/JP89/00469**

(87) International publication number:
**WO 89/11127 (16.11.89 89/27)**

(51) Int. Cl.⁵: **G06F 9/06**

(30) Priority: 13.05.88 JP 116573/88

(43) Date of publication of application:
**23.05.90 Bulletin 90/21**

(84) Designated Contracting States:
**DE GB IT**

(71) Applicant: **FANUC LTD**
**3580, Shibokusa Aza-Komanba Oshino-mura**
**Minamitsuru-gun Yamanashi 401-05(JP)**

(72) Inventor: **SEKI, Masaki**
**3-15-2-406, Takaido-nishi**
**Suginami-ku Tokyo 168(JP)**
Inventor: **TAKEGAHARA, Takashi**
**256-2, Nishiterakata-cho**
**Hachioji-shi Tokyo 192-01(JP)**
Inventor: **ITOH, Kohichi Fanuc Dai-3**
**Vira-karamatsu**
**3527-1 Shibokusa Oshino-mura,**
**Minamitsuru-gun Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **ROM WRITING APPARATUS.**

(57) In a ROM writing apparatus of the present invention, a program or data in a machine language is modularized and at least one of them is stored in an external storage (12), and a program in a source form is converted to a machine language by conversion means (13). A program converted by editing means (15) and the module stored in the external storage are merged and outputted to a ROM writer (16) and written into ROM (17) through the ROM writer.

FIG. 1

## DESCRIPTION

## ROM WRITING APPARATUS

Technical Field

This invention relates to a ROM writing apparatus and, more particularly,to an apparatus for writing a machine language program or data required for the program in a ROM.

Background Art

A microprocessor or the like is adapted to execute predetermined processing based on a program written in a ROM. Accordingly, the processor can be made to execute different processing by changing the program written in the ROM.

The program or data stored in the ROM is machine language. Consequently, it is necessary to convert the program or data (a source format program or data), which is created in source language, from the source format to the machine language and subsequently write the program or data in the ROM.

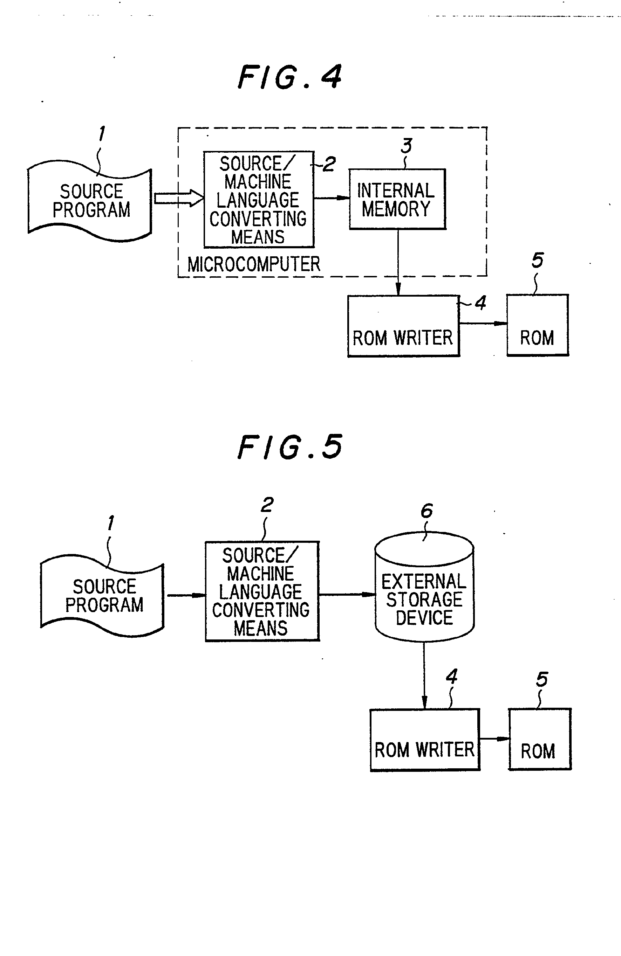

Accordingly, as shown in Fig. 4, the practice in the prior art is to convert a source program 1, which has been created in a source format, into machine language by source/machine language converting means 2, store the machine language in an internal memory 3, and thereafter write the machine-language program, which has been stored in the internal memory 3, in a ROM 5 by a ROM writer 4. Further, as shown in Fig. 5, a conventional practice is to output a program, which has been converted into machine language, to a large-capacity external storage device (a floppy disk, etc.) 6, and thereafter read the machine-language program successively from the external storage device and write the program in the ROM 5 by the ROM writer 4.

However, the method of Fig. 4 involves a limitation in terms of the storage capacity of the internal memory. A problem that arises is that large programs cannot be completely stored.

With the method of Fig. 5, two procedures must be followed, namely outputting the machine-language program to the external storage device and writing the program from the external storage device to the ROM. Moreover, the entire source-format program must be converted into machine language and then stored in the external storage device. This is a troublesome operation and the program cannot be written in the ROM rapidly.

Accordingly, an object of the present invention is to provide a ROM writing apparatus capable of solving the problems of the prior art by employing both of the conventional first and second methods.

Disclosure of the Invention

A ROM writing apparatus according to the present invention comprises an external storage device for storing a machine-language program or data in module form, converting means for converting a program or data in a source format into machine language, editing means for editing and then outputting the converted program or data and the modules stored in the external storage device, and a ROM writer for writing the machine-language program or data, which is outputted by the editing means, in a ROM. In accordance with this ROM writing apparatus, a program which is large in volume can be written in a ROM highly efficiently and through a simple operation.

Brief Description of the Drawings

Fig.1 is a block diagram of a ROM writing apparatus according to the present invention;

Fig. 2 is an explanatory view illustrating an example of editing in the present invention;

Fig. 3 is an explanatory view illustrating another example of editing in the present invention; and

Figs. 4 and 5 are views respectively showing the arrangement of first and second methods according to the prior art.

Best Mode for Carrying Out the Invention

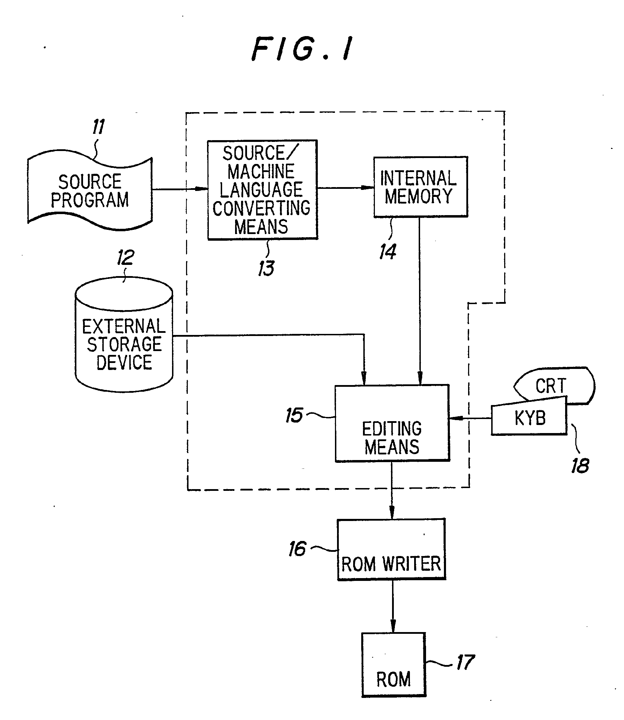

Fig.1 is a block diagram of a ROM writing apparatus according to the present invention.

Numeral 11 denotes a program or data created in a source language (referred to as a "source-format program"), 12 an external storage device for storing, in the form of one or more modules, a program or data in a machine language (referred to as a "machine language-format program"), 13 converting means for converting the source-format program into the machine language-format program, 14 an internal memory for storing the converted machine language-format program, 15 editing means for suitably editing and then outputting the machine language-format program stored in the internal memory 14 and the modules stored in the external storage device 12, 16 a ROM writer, 17 a ROM, and 18 an input/output unit comprising a keyboard KYB and a display device CRT. It is possible for the source/machine languange converting means 13, internal memory 14 and editing means 15 to be constituted by a microcomputer.

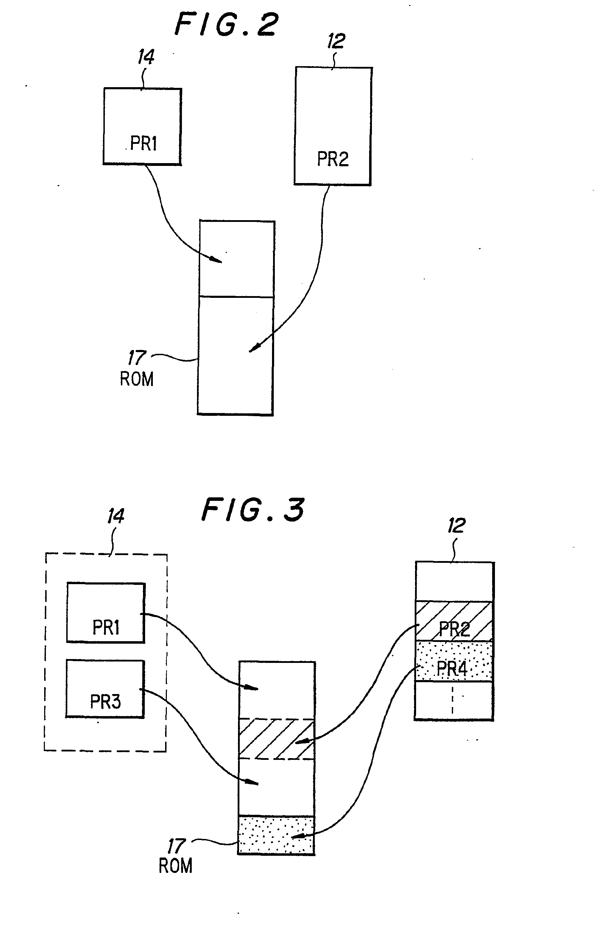

The overall operation of Fig. 1 will now be described assuming that editing is performed as shown in Fig. 2.

When the machine language-format program is created, it is registered in the external storage device (a floppy or hard disk) 12 along with module names assigned as necessary.

When a new program to be written in the ROM is created, the modules stored in the external storage device 12 are taken into consideration and the source-format program 11 is created only for those portions other than the modules. The program is fed into the source-machine language converting means 13.

The source-machine language converting means 13 successively converts the entered source-format program into the machine language-format program and stores this program in the internal memory 14.

Thereafter, the editing procedure is designated at the keyboard KYB. For example, on the assumption that an entire program is created by disposing a predetermined module (machine language-format program) PR2 stored in the external storage device 12 after a machine language-format program PR1 (see Fig. 2) stored in the internal memory 14, and that the complete program is to be written in the ROM 17, output of the machine language-format program PR1 is instructed first.

As a result, the editing means 15 outputs the machine language-format program PR1, which has been stored in the internal memory 14, to the ROM writer 16.

Next, output of the machine language-format program PR2 to the ROM writer 16 is instructed. As a result, the editing means 15 reads the machine language-format program PR2 from the external storage device 12 and outputs it to the ROM writer 16.

The ROM writer 16 writes the entered machine language-format programs PR1, PR2 in the ROM 17 in the order mentioned. The end result is that a complete program is stored in the ROM 17, as shown in Fig. 2.

As shown in Fig. 3, it can also be arranged so that several source-format programs (PR1, PR3) that have been converted into machine language and several machine language-format programs (PR2, PR4) stored in the external storage device 12 are suitably edited to create an entire program which is stored in the ROM.

In accordance with the present invention as set forth above, a source-format program is entered and written in a ROM while being converted into machine language, and a machine language-format program is written in the ROM while being entered from an external storage device as necessary. As a result, a program which is large in volume can be written in a ROM highly efficiently and through a simple operation.

CLAIMS:

1.   A ROM writing apparatus for converting a program or data into machine language and writing it in a ROM, characterized by comprising:

an external storage device for storing a machine-language program or data in module form;

converting means for converting a program or data in a source format into machine language;

editing means for editing and then outputting the converted program or data and the modules stored in the external storage device; and

a ROM writer for writing the machine-language program or data, which is outputted by the editing means, in a ROM.

2.   A ROM writing apparatus according to claim 1, characterized by further comprising means for designating an editing procedure.

# FIG. 1

# FIG.2

# FIG.3

## FIG.4

## FIG.5

# INTERNATIONAL SEARCH REPORT

International Application No PCT/JP89/00469

## I. CLASSIFICATION OF SUBJECT MATTER (if several classification symbols apply, indicate all) 6

According to International Patent Classification (IPC) or to both National Classification and IPC

Int. Cl⁴    G06F9/06

## II. FIELDS SEARCHED

| Minimum Documentation Searched 7 | |
|---|---|
| Classification System | Classification Symbols |
| IPC | G06F9/06, G11C17/00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 59-214949 (Mitsubishi Heavy Industries, Ltd.) 4 December 1984 (04. 12. 84) | 1-2 |
| Y | JP, A, 60-189503 (Mitsubishi Electric Corporation) 27 September 1985 (27. 09. 85) | 1-2 |
| Y | JP, A, 61-105641 (Fujitsu Ltd.) 23 May 1986 (23. 05. 86) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 17, 1989 (17. 07. 89) | July 31, 1989 (31. 07. 89) |
| International Searching Authority | Signature of Authorized Officer |
| Japanese Patent Office | |

Form PCT·ISA/210 (second sheet) (January 1985)